Europäisches Patentamt

(19) **European Patent Office**

Office européen des brevets

(11) Publication number: **0 239 325 B1**

## EUROPEAN PATENT SPECIFICATION

(45) Date of publication of patent specification: **21.11.91**

(51) Int. Cl.⁵: **G11B 5/58**, G11B 5/584, G11B 5/588

(21) Application number: **87302384.0**

(22) Date of filing: **19.03.87**

(54) Tracking control systems.

(30) Priority: **20.03.86 JP 64562/86**

(43) Date of publication of application:
**30.09.87 Bulletin 87/40**

(45) Publication of the grant of the patent:
**21.11.91 Bulletin 91/47**

(84) Designated Contracting States:
**DE FR GB NL**

(56) References cited:
**EP-A- 0 079 748**

**PATENT ABSTRACTS OF JAPAN, unexamined applications, P field, vol. 8, no. 42, February 23, 1984 THE PATENT OFFICE JAPANESE GOVERNMENT page 105 P 256**

**PATENT ABSTRACTS OF JAPAN, unexamined applications, P field, vol. 9, no. 109, May 14, 1985 THE PATENT OFFICE JAPANESE GOVERNMENT page 21 P 355**

(73) Proprietor: **SONY CORPORATION**
**7-35 Kitashinagawa 6-Chome Shinagawa-ku Tokyo 141(JP)**

(72) Inventor: **Imai, Toshiaki c/o Patents Division Sony Corporation 6-7-35 Kitashinagawa Shinagawa-ku Tokyo 141(JP)**

(74) Representative: **Thomas, Christopher Hugo et al**
**D Young & Co 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to tracking control systems for recording and/or reproducing apparatus, such as a video tape recording and/or reproducing apparatus (VTR).

In peripheral scanning type recording and/or reproducing apparatus, such as VTRs, tracking has to be performed for adjusting the position of a magnetic head mounted on a rotary head drum to be at a predetermined position relative to a recording track on a recording medium, such as VTR tape. Known VTRs having a slow reproduction mode, usually perform normal tracking control and slow tracking control for tracking the magnetic heads relative to the recording tracks. For example, when the VTR is operated in a fast reproduction mode and the normal reproduction mode, a normal tracking control is selected for controlling the phase of a capstan motor. On the other hand, when the VTR operates in the slow reproduction mode, a slow tracking control is selected for controlling a braking device for the capstan motor.

The adjusting magnitude for tracking the magnetic head relative to the recording track tends to differ between individual VTRs due to mechanical errors in the tape driving system and differences in the braking period of the capstan motor. This requires adjustment of the magnitude of the tracking control for each VTR. In addition, since each individual VTR has its own unique tracking to compensate for differences of tracking adjustment magnitude when reproducing video signals that have been recorded by a different VTR.

To effect such control, tracking volumes comprising rotary dials, are provided in each normal tracking control circuit and slow tracking control circuit. Therefore, the user selects the tracking volume corresponding to the selected reproduction mode, to perform tracking with respect to VTR tape recorded by a different VTR to minimize noise in the video signal to obtain the optimum tracking condition.

On the other hand, when the VTR tape has been recorded by the same VTR, the tracking volume corresponding to the selected reproduction mode should be returned to an initial or normal position or a centre click position to obtain a suitable tracking position.

However, such tracking control operation is troublesome for the user, for example because it requires selection of the correct one of two tracking volumes for performing the tracking control operation.

According to the present invention there is provided a tracking control system comprising:
a head assembly for reproducing data recorded on a recording track of a recording medium;
drive means for driving said recording medium relative to said head assembly; and
adjusting means for adjusting the relative position of said head assembly and said recording track where said recorded data is reproduced through said head assembly, said relative position including a preset standard position;
characterised by:
switch means, cooperating with said adjusting means for controlling said adjusting means, said switch means including manually operable first and second switches; and
control means, responsive to manual operation of said first switch, for operating said adjusting means to cause shifting of said relative position of said head assembly and said recording track in a first direction, and responsive to manual operation of said second switch for operating said adjusting means to cause shifting of said relative position in a second direction opposite to said first direction, said control means being further responsive to simultaneous manual operation of said first and second switches, for operating said adjusting means to set said relative position at said standard position.

An embodiment of tracking control system according to the present invention may employ an up switch and a down switch for respectively increasing and decreasing the tracking control or adjustment magnitude. This simplifies the tracking operation to be performed by the user. The tracking control system may also have the additional feature of instantly setting the tracking control system at a predetermined position by operating the up switch and the down switch simultaneously.

The tracking control system may comprise a head assembly for reproducing data recorded on a track of a recording medium, first means for driving the recording medium with the recorded track across the head assembly, second means for adjusting the relative position of the head assembly and the recorded track on the recording medium at the position where the recorded data is reproduced through the head assembly, the relative position including a preset standard position, third means, cooperating with the second means, for controlling the second means, the third means including a first switch manually operable for operating the second means to cause cyclical shifting of the relative position between the head assembly and the recording track in a first direction and a second switch manually operable for operating the second means to cause cyclical shifting of the relative position in a second direction opposite to the first direction, and fourth means, responsive to simultaneous manual operation of the first and second switches, for operating the second means to set the relative position at the standard position.

The tracking control system may further comprise memory means for storing first data indicative of the standard position and second data indicative of a current relative position. In a preferred embodiment, the third means derives third data indicative of a relative position towards which the second means is operated based on the second data and a predetermined shifting magnitude in the first and second directions. In practical operation, the third means increases the third data by a value corresponding to the predetermined shifting magnitude when manual operation of the first switch is detected, to cause shifting of the relative position in the first direction and decreases the third data by the desired value when manual operation of the second switch is detected, to cause shifting of the relative position in the second direction. In order to cause shifting of the relative position cyclically, the third means cyclically checks for manual operation of the first and second switches for cyclically adjusting the relative position by operating the second means. This allows cyclical shifting of the relative position by maintaining one of the first and the second switches in the manually operated position.

In a further preferred embodiment, the first means is operable for driving the recording medium at mutually different first and second speeds for reproducing the recorded data in different reproduction speed modes, and the second means comprises a first adjusting means active while the first means is in operation at the first speed, for adjusting its relative position, and a second adjusting means active while the first means is in operation at the second speed, for adjusting the relative position. In this case, a memory means stores a first speed reproduction mode for driving the recording medium at a first speed, second data indicative of a second standard position for a second speed reproduction mode to drive the recording medium at a second speed, third data indicative of a current relative position between the head assembly and the recording track in the first speed reproduction mode, and fourth data indicative of a current relative position in the second speed reproduction mode. Accordingly, the third means derives fifth data indicative of a relative position towards which the second means is operated based on the third data and a predetermined first shifting magnitude in the first and second directions during the first speed reproduction mode operation, and derives sixth data indicative of a relative position towards which the second means is operated based on the fourth data and a second predetermined shifting magnitude in the first and second directions during the second speed reproduction mode operation. In practice, the third means increases the fifth data by a first value corresponding to the first shifting magnitude when manual operation of the first switch is detected, to cause shifting of the relative position in the first direction, decreases the fifth data by the first value when manual operation of the second switch is detected, to cause shifting of the relative position in the second direction, increases the sixth data by a second value corresponding to the second shifting magnitude when manual operation of the first switch is detected, to cause shifting of the relative position in the first direction, and decreases the sixth data by the second value when manual operation of the second switch is detected, to cause shifting of the relative position in the second direction.

The invention will now be described by way of example with reference to the accompanying drawings, throughout which like parts are referred to by like references, and in which:

Figure 1 is a block diagram of an embodiment according to the invention of a tracking control system for a peripheral scanning type magnetic tape recording and/or reproducing apparatus; and

Figures 2A and 2B show a flowchart of a tracking control program to be performed by the system of Figure 1.

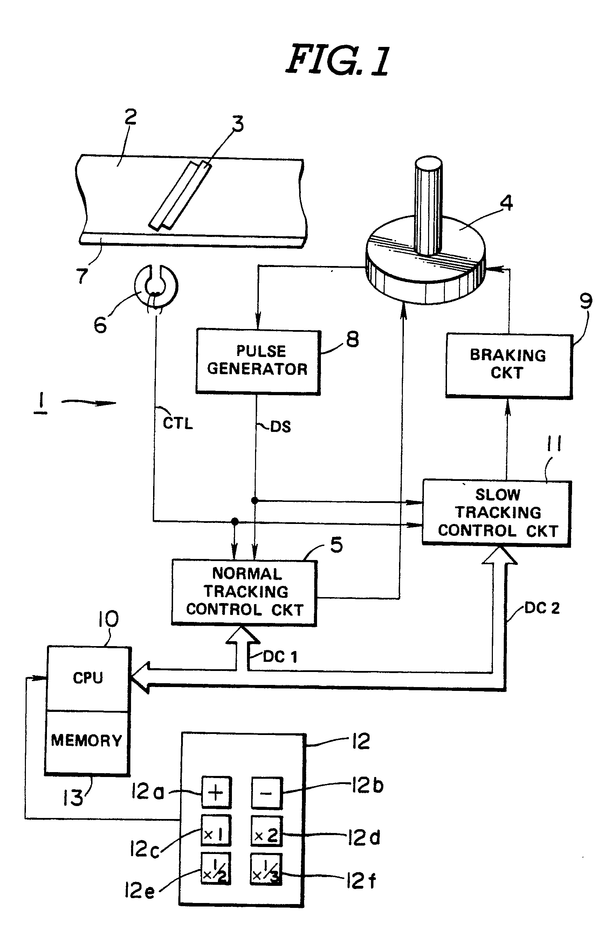

Referring now to the drawings, initially to Figure 1, the tracking control system 1 is designed for controlling driving and braking of a capstan motor 4 so that a magnetic head of a VTR can be suitably and accurately guided with respect to a recording track 3 on a VTR tape 2.

The tracking control system 1 includes a normal tracking control circuit 5 which receives a control signal CTL (CTL signal) recorded on a control signal track on the tape 2 and reproduced by a control head 6. The normal tracking control circuit 5 also receives a motor speed indicative signal DS produced by a pulse generator 8 and representative of the rotational speed of the capstan motor 4. The normal tracking control circuit 5 is further connected to a central processing unit (CPU) 10 to receive therefrom a normal tracking control signal DC1. The normal tracking control circuit 5 derives a control value based on the CTL signal, the motor speed signal DC1 for controlling the phase of the capstan motor 4 in order to perform normal tracking control.

The tracking control system 1 also has a slow tracking control circuit 11 which is also connected to the control head 6 and the pulse generator 8 to receive therefrom the CTL signal and the motor speed indicative signal DS. The slow tracking control circuit 11 also receives a slow tracking control signal DC2. Based on the CTL signal, the motor speed indicative signal DS and the slow tracking control signal DC2, the slow tracking control circuit 11 derives a control value for controlling a braking circuit 9 which applies a brake for the capstan motor 4, in order to perform slow tracking control.

The CPU 10 is operably associated with a manual controller 12. The manual controller 12 has a plurality of operation switches 12a to 12f, such as contact switches. The CPU 10 is further cooperably associated with a memory 13 for storing preset tracking data. In this embodiment, the manual controller 12 includes an up switch 12a, a down switch 12b, a normal reproduction mode switch 12c, a fast speed (double speed) reproduction mode switch 12d, and slow speed (half speed and one-third speed) reproduction mode switches 12e and 12f. The CPU 10 is responsive to manual operation of one of the up switch 12a and the down switch 12b to read out stored tracking data corresponding to the reproduction mode selected by the switches 12c to 12f. Based on the read tracking data, the CPU 10 supplies one of the normal and slow tracking control signals DC1 and DC2.

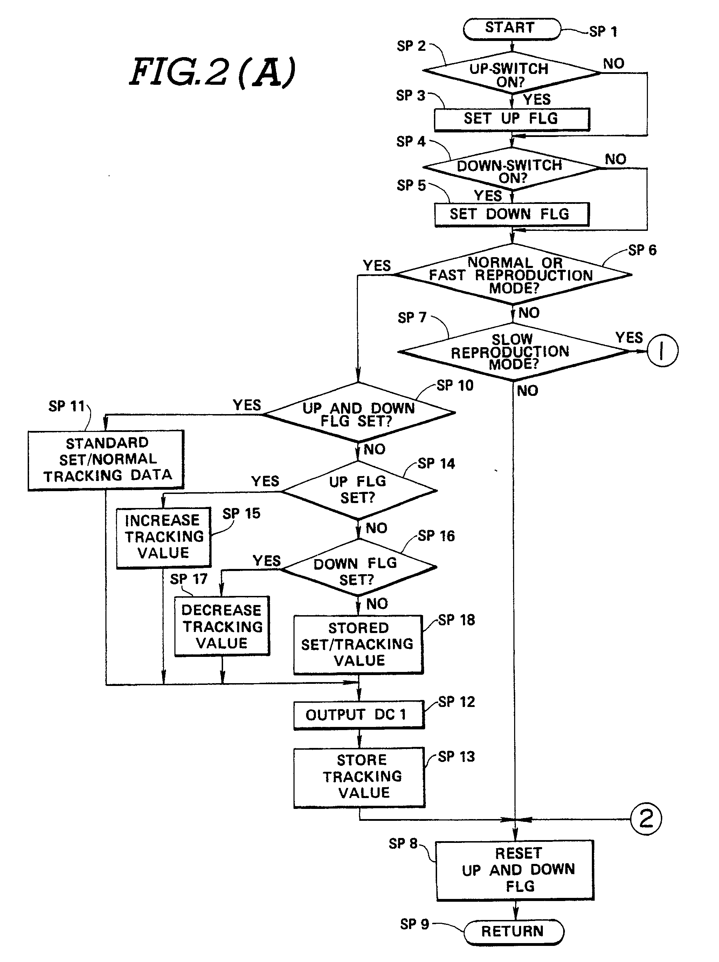

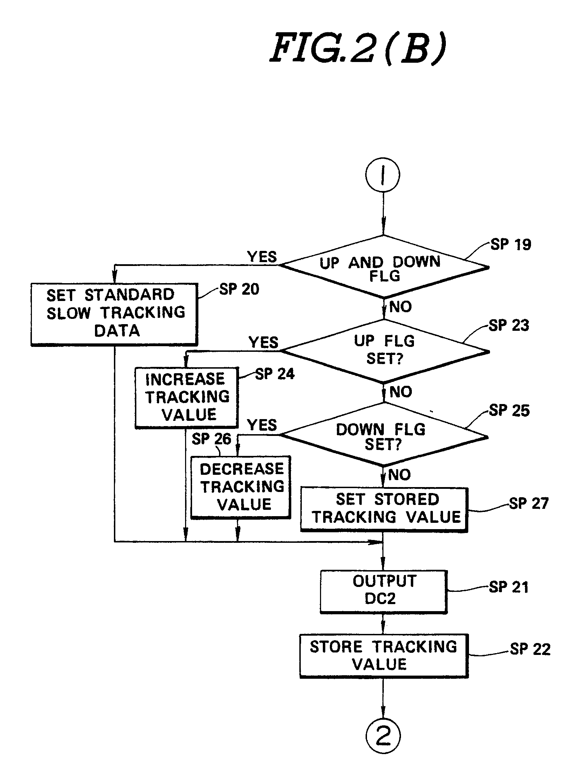

The CPU 10 periodically or cyclically executes the tracking control program of Figure 2 for performing tracking control operation. In execution of the tracking control program, the CPU 10 checks whether at least one of the up and down switches 12a and 12b are operated or not. Namely, while the CPU 10 is active, the tracking control system 1 is constantly held in stand-by state to be ready to perform tracking operation in response to manual operation of one of the up and down switches 12a and 12b.

During operation, the tracking control program of Figures 2A and 2B are started at a step SP1. Immediately after starting execution of the tracking control program, a check is performed on whether the up switch 12a is operated or not, at a step SP2. When operation of the up switch 12a is detected at the step SP2, an UP flag is set at a step SP3. After setting the UP flag at the step SP3 or when operation of the up switch 12a is not detected as checked at the step SP2, the program goes to a step SP4 to check whether the down swtich 12b is operated or not. When operation of the down switch 12b is detected at the step SP4, a DOWN flag is set at a step SP5.

After the step SP5 or when the down switch is not operated as checked at the step SP4, the program goes to a step SP6. In the step SP6, the reproduction mode is checked for whether normal speed reproduction mode or fast speed reproduction mode is selected by the switch 12c or 12d. When the reproduction mode is not normal speed reproduction mode or fast speed reproduction mode, the program goes to a step SP7 to check whether the reproduction mode is slow speed reproduction mode selected by the switch 12e and 12f. When the reproduction mode as checked at the step SP7 is not slow speed reproduction mode, and consequently the no reproduction mode is selected, the UP and DOWN flags are reset at a step SP8, and the program returns to the first step SP1 through a step SP9.

On the other hand, when the reproduction mode as checked at the step SP6 is the normal or fast speed reproduction mode, the program goes to a step SP10 where the UP and DOWN flags are checked for whether both flags are set. If both flags are set, standard normal tracking data stored in the memory 13, is read out and set as tracking control data, at a step SP11. Based on the tracking control data set at the step SP11, the tracking control signal DC1 is derived and supplied at a step SP12. In response to the tracking control signal DC1 from the CPU 10, the normal tracking control circuit 5 operates the capstan motor 4 to set the phase corresponding to the standard normal tracking data read out at the step SP11.

After supplying the tracking control signal DC1 at the step SP12, the value of the tracking control signal DC1 which represents the standard normal tracking data, is stored in a normal tracking memory area in the memory 13, at a step SP13. Thereafter the program goes to the step SP8 to reset the UP and DOWN flags and return to the step SP1 through the step SP9.

Therefore, when both the up switch 12a and the down switch 12b are operated simultaneously to set both the UP and DOWN flags at the steps SP3 and SP5, the VTR is operated in the selected normal speed or fast speed reproduction mode in the standard tracking condition.

On the other hand, when either the UP flag or the DOWN flag is not set as checked at the step SP10, a check is performed as to whether the UP flag is set at a step SP14. When setting of the UP flag is detected at the step SP14, the value stored in the normal tracking memory area in the memory 13 is read out and increased by a predetermined normal increase value which is stored in the memory 13, at a step SP15. The CPU 10 derives the tracking control signal DC1 based on the increased value as derived at a step SP15 and supplies it to the normal tracking control circuit 5, at the step SP12. The content of the normal tracking memory area is then updated with the output tracking control signal value, at the step SP13.

Therefore, by operating the up switch 12a during the normal speed or the fast speed reproduction mode, the tracking magnitude, which is the magnitude in the advance of the capstan motor's phase from a standard phase corresponding to a standard normal tracking position, is increased by a given magnitude corresponding to the unit value to be added. As will be appreciated herefrom, the tracking magnitude is increased by the given magnitude every time the up switch 12a is operated.

On the other hand, when the UP flag is not set as checked at the step SP14, the DOWN flag is checked for whether it is set or not, at a step SP16. When setting of the DOWN flag is detected at the step SP16, the value stored in the normal tracking memory area of the memory 13 is decreased by a predetermined normal decrease value which is stored in the memory 13 to be read out in response to operation of the down switch 12b during normal or fast speed reproduction, at a step SP17. Based on the decreased value as derived at the step SP17, the tracking control signal DC1 is derived and supplied at the step SP12. Then the tracking control signal value is stored in the normal tracking memory area at the step SP13.

Therefore, by operating the down switch 12b during the normal speed reproduction mode, the tracking magnitude, which is a retarding magnitude for application timing of the brake for the capstan motor 4, relative to a standard phase corresponding to a standard normal tracking position, is decreased by a given magnitude corresponding to the unit value to be subtracted, to advance the application timing of the brake for the capstan motor 4. As will be appreciated, the tracking magnitude is decreased by the given magnitude every time manual operation of the down switch 12b is detected.

When the DOWN flag is not set as checked at the step SP16, which indicates that neither of the up and down switches 12a and 12b is operated, the stored value in the normal tracking memory area in the memory 13 is read out. In this case, the tracking control signal DC1 derived from the read out value is supplied at the step SP12. At this time, the tracking magnitude to be changed is zero, and the phase of the capstan motor 4 is held at its unshifted position.

On the other hand, when the slow reproduction mode is selected by one of the switches 12e and 12f, the program goes to a step SP19. At the step SP19, the UP and DOWN flags are checked for whether both flags are set, as in the step SP10. If both flags are set as checked at the step SP19, standard slow tracking data stored in the memory 13, is read out and set as tracking control data, at a step SP20. Based on the set tracking control data set at the step SP20, the tracking control signal DC2 is derived and supplied at a step SP21. In response to the tracking control signal DC2 from the CPU 10, the normal tracking control circuit 5 operates the capstan motor 4 to set the phase corresponding to the standard slow tracking data read out at the step SP20.

After supplying the tracking control signal DC2 at the step SP21, the value of the tracking control signal DC2 which represents the standard slow tracking data, is stored in a slow tracking memory area in the memory 13, at a step SP22. Thereafter the program goes to the step SP8 to reset the UP and DOWN flags and return to the step SP1 through the step SP9.

Therefore, when both the up switch 12a and the down switch 12b are operated simultaneously to set both the UP and DOWN flags at the steps SP3 and SP5, the VTR is operated in the selected slow speed reproduction mode in the standard tracking condition.

On the other hand, when either the UP flag or the DOWN flag is not set as checked at the step SP19, a check is performed as to whether the UP flag is set, at a step SP23. When setting of the UP flag is detected at the step SP23, the value stored in the slow tracking memory area in the memory 13 is read out and increased by a predetermined slow increase value which is stored in the memory 13, at a step SP24. The CPU 10 derives the tracking control signal DC2 based on the increased value as derived at the step SP24 and supplies it to the normal tracking control circuit 5, at the step SP21. The content of the normal tracking memory area is then updated with the output tracking control signal value, at the step SP22.

Therefore, by operating the up switch 12a during the slow speed reproduction mode, the tracking magnitude which is a retarding magnitude for application timing of the brake for the capstan motor 4 relative to the standard phase corresponding to a standard slow tracking position, is increased by a given magnitude corresponding to the unit value to be added. As will be appreciated, the tracking magnitude is increased by the given magnitude every time manual operation of the up switch 12a is detected.

On the other hand, when the UP flag is not set as checked at the step SP23, the DOWN flag is checked at a step SP25. When setting of the DOWN flag is detected at the step SP25, the value stored in the normal tracking memory area of the memory 13 is decreased by a predetermined slow decrease value which is stored in the memory 13 and to be read out in response to operation of the down switch during normal or fast speed reproduction, at a step SP26. Based on the decreased value as derived at the step SP26, the tracking control signal DC2 is derived and supplied at the step SP21. Then the tracking control signal value is stored in the slow tracking memory area at the step SP22.

Therefore, by operating the down switch 12b during the slow speed reproduction mode; the tracking magnitude which is a retarding magnitude for application timing of the brake for the capstan motor 4 relative to a standard phase corresponding to a standard slow tracking position, is decreased by a given magnitude corresponding to the unit value to be subtracted to advance the application timing of the brake for the capstan motor 4. As will be appreciated, the tracking magnitude is decreased by the given magnitude every time manual operation of the down switch 12b is detected.

When the DOWN flag is not set as checked at the step SP25, which indicates that neither of the up and down switches 12a and 12b is operated, the stored value in the slow tracking memory area in the memory 13 is read out at a step SP27. In this case, the tracking control signal DC2 derived based on the read out value is supplied at the step SP21. At this time, the tracking magnitude to be changed is zero, so the braking timing for the capstana motor 4 is held at the unshifted position.

In practical tracking control operation, the user manually operates the up and down switches 12a and 12b while observing a monitor screen in order to look for the best tracking position at which the least noise is superimposed on the reproduced image. During tracking control operation in normal or fast speed reproduction mode, the capstan motor phase is cyclically advanced by the given magnitude corresponding to the normal increase value, as long as the up switch 12a is continuously operated. Namely, while the up switch 12a is sequentially operated or held depressed, the CPU 10 performs the steps SP1, SP2, SP3, SP4, SP6, SP10, SP14, SP15, SP12, SP13, SP8 and SP9 cyclically at the timing of execution of the tracking control program. When the best tracking position with the least noise on the reproduced image has been found, the user releases the up switch 12a. As a result, the answer at the step SP2 becomes NO in the subsequent program cycle. Therefore, the phase of the capstan motor 4 is not advanced any further.

On the other hand, the capstan motor phase is cyclically retarded by the given magnitude corresponding to the normal decrease value, as long as the down switch 12b is operated. Namely, in this case, the CPU 10 performs the steps SP1, SP2, SP4, SP5, SP6, SP10, SP14, SP16, SP17, SP12, SP13, SP8 and SP9. After releasing the down switch 12b, the DOWN flag which is set in the steps SP5 while the down switch 12b is operated, will cease to be set. Therefore, the capstan motor phase will not be retarded any further.

When both the up and down switches 12a and 12b are operated simultaneously, the CPU 10 performs the steps SP1, SP2, SP3, SP4, SP5, SP6, SP10, SP11, SP12, SP13, SP8 and SP9. Through the sequence of operation, the capstan motor phase is set at the predetermined standard phase corresponding to the normal standard tracking position. On the other hand, when neither of the up and down switches 12a and 12b are depressed, the tracking position corresponding to the value stored in the normal tracking memory area is cyclically read out through the steps SP1, SP2, SP4, SP6, SP10, SP14, SP16, SP18, SP12, SP13, SP8 and SP9.

On the other hand, when the reproduction of the recorded video signal is performed in slow reproduction mode by operating one of the switches 12e and 12f, the braking timing for the capstan motor 4 is cyclically retarded or delayed by maintaining depression of the up switch 12a. In this case, the CPU 10 performs the steps SP1, SP2, SP3, SP4, SP6, SP7, SP19, SP23, SP24, SP21, SP22, SP8 and SP9. Retarding the application timing of the brake for the capstan motor 4 is cyclically performed until the up switch 12a is released.

While the down switch 12b is held depressed, the braking timing for the capstan motor 4 is advanced to apply the brake at an earlier timing. The CPU 10 performs the steps SP1, SP2, SP4, SP5, SP6, SP7, SP19, SP23, SP25, SP26, SP21, SP22, SP8 and SP9.

Similarly to the normal or fast reproduction mode, when both of the up and sown switches 12a and 12b are operated simultaneously, the CPU 10 performs the steps SP1, SP2, SP3, SP4, SP5, SP6, SP19, SP20, SP21, SP22, SP8 and SP9. Through the sequence of operation, the time of application of the brake for the capstan motor 4 is set at the predetermined standard phase corresponding to the slow standard tracking position. On the other hand, while neither of the up and down switches 12a and 12b are depressed, the tracking position corresponding to the value stored in the slow tracking memory area is cyclically read out in the steps SP1, SP2, SP4, SP6, SP10, SP14, SP16, SP18, SP12, SP13, SP8 and SP9.

Although the described embodiment relates to tracking for a VTR, the invention can be applied to pulse code modulated audio tape reproduction apparatus or other apparatus which require tracking. Moreover, although the described embodiment is applied to a VTR with variable speed reproduction mode operations, the invention can be applied to single (normal speed) reproduction mode VTRs.

## Claims

1. A tracking control system (1) comprising:
   a head assembly for reproducing data recorded on a recording track (3) of a recording medium (2):
   drive means (4) for driving said recording medium (2) relative to said head assembly; and
   adjusting means (5, 11, 9) for adjusting the relative position of said head assembly and said recording track (3) where said recorded data is reproduced through said head assembly, said relative position including a preset standard position;

characterised by:

switch means (12), cooperating with said adjusting means (5, 11, 9) for controlling said adjusting means (5, 11, 9), said switch means (12) including manually operable first and second switches (12a, 12b); and

control means (10), responsive to manual operation of said first switch (12a), for operating said adjusting means (5, 11, 9) to cause shifting of said relative position of said head assembly and said recording track (3) in a first direction, and responsive to a manual operation of said second switch (12b) for operating said adjusting means (5, 11, 9) to cause shifting of said relative position in a second direction opposite to said first direction, said control means (10) being further responsive to simultaneous manual operation of said first and second switches (12a, 12b), for operating said adjusting means (5, 11, 9) to set said relative position at said standard position.

2. A system (1) according to claim 1 wherein said drive means (4) is operable for driving said recording medium (2) at different first and second speeds for reproducing said recorded data in different reproduction speed modes, and said adjusting means (5, 11, 9) comprises a first adjusting means (5) active while said drive means (4) is in operation at said first speed, for adjusting said relative position, and a second adjusting means (11, 9) active while said drive means (4) is in operation at said second speed, for adjusting said relative position.

3. A system (1) according to claim 1 further comprising memory means (13) for storing first data indicative of said standard position and second data indicative of a current relative position.

4. A system (1) according to claim 3 wherein said control means (10) derives third data indicative of a relative position towards which said second adjusting means (11, 9) is operated based on said second data and a predetermined shifting magnitude in said first and second directions.

5. A system (1) according to claim 4 wherein said control means (10) increases said third data by a value corresponding to said predetermined shifting magnitude when manual operation of said first switch (12a) is detected, to cause shifting of said relative position in said first direction, and decreases said third data by said value when manual operation of said second switch (12b) is detected, to cause shifting of said relative position in said second direction.

6. A system (1) according to claim 2 which further comprises memory means (13) for storing first data indicative of a first standard position for a first speed reproduction mode for driving said recording medium (2) at said first speed, second data indicative of a second standard position for a second speed reproduction mode to drive said recording medium (2) at said second speed, third data indicative of the current relative position between said head assembly and said recording track (3) in said first speed reproduction mode, and fourth data indicative of the current relative position in said second speed reproduction mode.

7. A system (1) according to claim 6 wherein said control means (10) derives fifth data indicative of a relative position towards which said adjusting means (5, 11, 9) is operated based on said third data and a predetermined first shifting magnitude in said first and second directions during said first speed reproduction mode operation, and derives sixth data indicative of the relative position towards which said adjusting means (5, 11, 9) is operated based on said fourth data and a second predetermined shifting magnitude in said first and second directions during said second speed reproduction mode operation.

8. A system (1) according to claim 7 wherein said control means (10) increases said fifth data by a first value corresponding to said first shifting magnitude when manual operation of said first switch (12a) is detected, to cause shifting of said relative position in said first direction, decreases said fifth data by said first value when manual operation of said second switch (12b) is detected, to cause shifting of said relative position in said second direction, increases said sixth data by a second value corresponding to said second shifting magnitude when manual operation of said first switch (12a) is detected, to cause shifting of said relative position in said first direction, and decreases said sixth data by said second value when manual operation of said second switch (2b) is detected, to cause shifting of said relative position in said second direction.

9. A system (1) according to claim 8 wherein said control means (10) cyclically checks manual operation of said first and second switches (12a, 12b) for cyclically adjusting said relative position.

## Revendications

1. Système de commande de l'alignement (1) comportant :

un ensemble constituant la tête pour reproduire des données enregistrées sur une piste d'enregistrement (3) d'un support d'enregistrement (2) ;

des moyens d'entraînement (4) pour entraîner ledit support d'enregistrement (2) par rapport audit ensemble constituant la tête ; et

des moyens d'ajustement (5, 11, 9) pour ajuster la position relative dudit ensemble constituant la tête et de ladite piste d'enregistrement (3) pour laquelle lesdites données enregistrées sont reproduites dans ledit ensemble constituant la tête, ladite position relative incluant une position standard prédéterminée ;

système caractérisé par :

des moyens de commutation (12) coopérant avec lesdits moyens d'ajustement (5, 11, 9) pour commander lesdits moyens d'ajustement (5, 11, 9), lesdits moyens de commutation (12) incluant un premier et un second commutateurs (12a, 12b) manoeuvrables manuellement et

des moyens de commande (10), sensibles à la manoeuvre manuelle dudit premier commutateur (12a), pour intervenir sur lesdits moyens d'ajustement (5, 11, 9) pour provoquer le décalage de ladite position relative dudit ensemble constituant la tête et de ladite piste d'enregistrement (3) dans une première direction, et sensibles à la manoeuvre manuelle dudit second commutateur (12b) pour intervenir sur lesdits moyens d'ajustements (5, 11, 9) pour provoquer le décalage de ladite position relative dans une seconde position opposée à ladite première direction, lesdits moyens de commande (10) étant en outre sensibles à la manoeuvre manuelle simultanée dudit premier et dudit second commutateurs (12a, 12b) pour intervenir sur lesdits moyens d'ajustement (5, 11, 9) pour faire que ladite position relative soit ladite position standard.

2. Système (1) conforme à la revendication 1, dans lequel lesdits moyens d'entraînement (4) peuvent intervenir pour entraîner ledit support d'enregistrement (2) à une première et à une seconde vitesses, différentes, pour reproduire lesdites données enregistrées en différents modes de vitesse de reproduction, et dans lequel lesdits moyens d'enregistrement (5, 11, 9) comportent des premiers moyens d'ajustement (5) qui interviennent pendant que lesdits moyens d'entraînement (4) opèrent à ladite première vitesse, pour ajuster ladite position relative, et des seconds moyens d'ajustement (11, 9), qui opèrent pendant que lesdits moyens d'entraînement (4) opèrent à ladite seconde vitesse, pour ajuster ladite position relative.

3. Système (1) selon la revendication 1, comportant en outre des moyens de mémorisation (13) pour mémoriser des premières données indicatives de ladite position standard et des secondes données indicatives de la position relative actuelle.

4. Système (1) selon la revendication 3, dans lequel lesdits moyens de commande (10), à partir desdites secondes données et d'une valeur prédéterminée du décalage dans ladite première et dans ladite seconde directions, font dériver des troisièmes valeurs indicatives d'une position relative en vue de laquelle lesdits seconds moyens d'ajustement (11, 9) interviennent.

5. Système (1) selon la revendication 4, dans lequel lesdits moyens de commande (10) augmentent lesdites troisièmes données d'une valeur correspondant à ladite valeur prédéterminée du décalage lorsqu'une manoeuvre manuelle dudit premier commutateur (12a) est détectée, pour provoquer le décalage de ladite position relative dans ladite première direction, et diminuent lesdites troisièmes données de ladite valeur désirée lorsqu'une manoeuvre manuelle dudit second commutateur (12b) est détectée, pour provoquer le décalage de ladite position relative dans ladite seconde direction.

6. Système (1) selon la revendication 2, comportant en outre des moyens de mémorisation (13) pour mémoriser des premières données, indicatives d'une première position standard, pour un premier mode de vitesse de reproduction pour entraîner ledit support d'enregistrement (2) à ladite première vitesse, des secondes données, indicatives d'une seconde position standard, pour un second mode de vitesse de reproduction pour entraîner ledit support d'enregistrement (2) à ladite seconde vitesse, des troisièmes données, indicatives de la position relative actuelle entre ledit ensemble constituant la tête et ladite piste d'enregistrement (3) dans ledit premier mode de vitesse de reproduction, et des quatrièmes données, indicatives de la position relative actuelle dans ledit second mode de vitesse de reproduction.

7. Système (1) selon la revendication 6, dans lequel lesdits moyens de commande (10), à partir desdites troisièmes données et d'une première valeur prédéterminée du décalage dans ladite première et ladite seconde directions pendant ledit premier mode opératoire de vitesse de reproduction, dérivent des cinquièmes données indicatives de la position relative en vue de laquelle lesdits moyens d'ajustement (5, 11, 9) interviennent, et, à partir desdites quatrièmes données et d'une seconde valeur prédéterminée du décalage dans ladite première et ladite seconde directions pendant ledit second mode opératoire de vitesse de reproduction, dérivent des sixièmes données indicatives de la position relative en vue de laquelle lesdits moyens d'ajustement (5, 11, 9) interviennent.

8. Système (1) selon la revendication 7, dans lequel lesdits moyens de commande (10) augmentent lesdites cinquièmes données d'une première valeur correspondant à ladite première valeur de décalage lorsque la manoeuvre manuelle dudit premier commutateur (12a) est détectée, pour provoquer le décalage de ladite position relative dans ladite première direction, diminuent lesdites cinquièmes données de ladite première valeur lorsque la manoeuvre manuelle dudit second commutateur (12) est détectée, pour provoquer le décalage de ladite position relative dans ladite seconde direction, augmentent lesdites sixièmes données d'une seconde valeur correspondant à ladite seconde valeur du décalage lorsque la manoeuvre manuelle dudit premier commutateur (12a) est détectée, pour provoquer le décalage de ladite position relative dans ladite première direction, et diminuent lesdites sixièmes données de ladite seconde valeur lorsque la manoeuvre manuelle dudit second commutateur (2b) est détectée, pour provoquer le décalage de ladite position relative dans ladite seconde direction.

9. Système (1) selon la revendication 8, dans lequel lesdits moyens de commande (10) vérifient cycliquement la manoeuvre manuelle dudit premier et dudit second commutateurs (12a, 12b) pour ajuster cycliquement ladite position relative.

## Patentansprüche

1. Nachführsteuersystem (1) mit
einer Kopfeinrichtung zum Wiedergeben von auf einer Aufzeichnungsspur (3) eines Aufzeichnungsmediums (2) aufgezeichneten Daten,
einer Antriebseinrichtung (4) zum Antrieb des Aufzeichnungsmediums (2) relativ zur Kopfeinrichtung, und
einer Einstelleinrichtung (5, 11, 9) zum Einstellen der relativen Position der Kopfeinrichtung und der Aufzeichnungsspur (3), wo die aufgezeichneten Daten durch die Kopfeinrichtung wiedergegeben werden, wobei die relative Position eine voreingestellte Standardposition aufweist,
**gekennzeichnet durch**
eine mit der Einstelleinrichtung (5, 11, 9) zum Steuern der Einstelleinrichtung (5, 11, 9) zusammenwirkende Schalteinrichtung (12), wobei die Schalteinrichtung (12) einen manuell betätigbaren ersten und zweiten Schalter (12a, 12b) aufweist, und
eine Steuereinrichtung (10), die auf die manuelle Betätigung des ersten Schalters (12a) anspricht, um die Einstelleinrichtung (5, 11, 9) so zu betätigen, daß eine Verschiebung der relativen Position der Kopfeinrichtung und der Aufzeichnungsspur (3) in einer ersten Richtung bewirkt wird, und die auf eine manuelle Betätigung des zweiten Schalters (12b) anspricht, um die Einstelleinrichtung (5, 11, 9) so zu betätigen, daß eine Verschiebung der relativen Position in einer zur ersten Richtung entgegengesetzten zweiten Richtung bewirkt wird, und wobei die Steuereinrichtung (10) auf eine gleichzeitige manuelle Betätigung des ersten und zweiten Schalters (12a, 12b) anspricht, um die Einstelleinrichtung (5, 11, 9) so zu betätigen, daß die relative Position auf die Standardposition eingestellt wird.

2. System (1) nach Anspruch 1, wobei die Antriebseinrichtung (4) zum Antrieb des Aufzeichnungsmediums (2) mit einer ersten Geschwindigkeit und einer davon verschiedenen zweiten Geschwindigkeit zur Wiedergabe der aufgezeichneten Daten in verschiedenen Wiedergabegeschwindigkeitsmoden betreibbar ist, und wobei die Einstelleinrichtung (5, 11, 9) eine erste Einstelleinrichtung (5), die während des Betriebs der Antriebseinrichtung (4) in der ersten Geschwindigkeit zum Einstellen der relativen Position aktiv ist, und eine zweite Einstelleinrichtung (11, 9) aufweist, die während des Betriebs der Antriebseinrichtung (4) in der zweiten Geschwindigkeit zum Einstellen der relativen Position aktiv ist.

3. System (1) nach Anspruch 1, mit einer Speichereinrichtung (13) zum Speichern von die Standardposition anzeigenden ersten Daten und von eine laufende relative Position anzeigenden zweiten Daten.

4. System (1) nach Anspruch 3, wobei die Steuereinrichtung (10) dritte Daten ableitet, die eine relative Position in einer Richtung, in welcher die zweite Einstelleinrichtung (11, 9) auf der Basis der zweiten Daten betrieben ist, und eine vorbestimmte Verschiebegröße in der ersten und zweiten Richtung anzeigen.

5. System (1) nach Anspruch 4, wobei die Steuereinrichtung (10) die dritten Daten beim Detektieren einer manuellen Betätigung des ersten Schalters (12a) um einen zur vorbestimmten Verschiebegröße korrespondierenden Wert erhöht, um eine Verschiebung der relativen Position in der ersten Richtung zu bewirken, und die dritten Daten beim Detektieren einer manuellen Betätigung des zweiten Schalters (12b) um diesen Wert erniedrigt, um eine Verschiebung der relativen Position in der zweiten Richtung zu bewirken.

6. System (1) nach Anspruch 2, mit einer Speichereinrichtung (13) zum Speichern von eine erste Standardposition für einen ersten Geschwindigkeitswiedergabemodus zum Antrieb des Aufzeichnungsmediums (2) mit der ersten Geschwindigkeit anzeigenden ersten Daten, von eine zweite Standardposition für einen zweiten Geschwindigkeitswiedergabemodus zum Antrieb des Aufzeichnungsmediums (2) mit der zweiten Geschwindigkeit anzeigenden zweiten Daten, von die laufende relative Position zwischen der Kopfeinrichtung und der Aufzeichnungsspur (3) im ersten Geschwindigkeitswiedergabemodus anzeigenden dritten Daten , und von die laufende relative Position im zweiten Geschwindigkeitswiedergabemodus anzeigenden vierten Daten.

7. System (1) nach Anspruch 6, wobei die Steuereinrichtung (10) fünfte Daten ableitet, welche eine relative Position in der Richtung, in welcher die Einstelleinrichtung (5, 11, 9) auf der Basis der dritten Daten betrieben wird, sowie eine vorbestimmte fünfte Verschiebegröße in der ersten und zweiten Richtung während des ersten Geschwindigkeitswiedergabemodus anzeigen, und sechste Daten ableitet, welche die relative Position in einer Richtung, in welcher die Einstelleinrichtung (5, 11, 9) auf der Basis der vierten Daten betrieben wird, sowie eine zweite vorbestimmte Verschiebegröße in der ersten und zweiten Richtung während des zweiten Geschwindigkeitswiedergabemodusbetriebes anzeigen.

8. System (1) nach Anspruch 7, wobei die Steuereinrichtung (10) die fünften Daten beim Detektieren einer manuellen Betätigung des ersten Schalters (12a) um einen zur ersten Verschiebegröße korrespondierenden ersten Wert erhöht, um eine Verschiebung der relativen Position in der ersten Richtung zu bewirken, die fünften Daten beim Detektieren einer manuellen Betätigung des zweiten Schalters (12b) um diesen ersten Wert erniedrigt, um eine Verschiebung der relativen Position in der zweiten Richtung zu bewirken, die sechsten Daten beim Detektieren einer manuellen Betätigung des ersten Schalters (12a) um einen zur zweiten Verschiebegröße korrespondierenden zweiten Wert erhöht, um eine Verschiebung der relativen Position in der ersten Richtung zu bewirken, und die sechsten Daten beim Detektieren einer manuellen Betätigung des zweiten Schalters (12b) um diesen zweiten Wert erhöht, um eine Verschiebung der relativen Position in der zweiten Richtung zu bewirken.

9. System (1) nach Anspruch 8, wobei die Steuereinrichtung (10) die manuelle Betätigung des ersten und zweiten Schalters (12a, 12b) zur zyklischen Einstellung der relativen Position zyklisch prüft.

# FIG. 1

PULSE GENERATOR 8

BRAKING CKT 9

CTL

DS

SLOW TRACKING CONTROL CKT 11

NORMAL TRACKING CONTROL CKT 5

DC 2

DC 1

CPU

MEMORY

13

12

12a +    − 12b

12c ×1    ×2 12d

12e ×½    ×⅓ 12f

# FIG.2 (A)

SP 1 — START

SP 2 — UP-SWITCH ON? — NO

YES

SP 3 — SET UP FLG

SP 4 — DOWN-SWITCH ON? — NO

SP 5 — YES

SET DOWN FLG

YES — NORMAL OR FAST REPRODUCTION MODE? — SP 6

SP 7 — NO — SLOW REPRODUCTION MODE? — YES — ①

NO

SP 11 — YES — UP AND DOWN FLG SET? — SP 10

STANDARD SET/NORMAL TRACKING DATA

NO

YES — UP FLG SET? — SP 14

INCREASE TRACKING VALUE — SP 15

NO

SP 17 — YES — DOWN FLG SET? — SP 16

DECREASE TRACKING VALUE

NO

STORED SET/TRACKING VALUE — SP 18

OUTPUT DC 1 — SP 12

STORE TRACKING VALUE — SP 13

②

SP 8 — RESET UP AND DOWN FLG

SP 9 — RETURN

# FIG.2(B)